# EUROPEAN PATENT SPECIFICATION

(11) **EP 3 803 465 B1**
(45) Date of publication and mention of the grant of the patent: **16.10.2024**
(21) Application number: 18921472.9
(22) Date of filing: 08.06.2018
(51) Int. Cl.: G01S 19/34, G01S 5/00, G01S 19/48

(54) **A WIRELESS DEVICE AND METHOD THEREIN FOR POSITIONING A WIRELESS DEVICE IN A WIRELESS COMMUNICATIONS NETWORK**
DRAHTLOSE VORRICHTUNG UND VERFAHREN DARIN ZUR POSITIONIERUNG EINER DRAHTLOSEN VORRICHTUNG IN EINEM DRAHTLOSKOMMUNIKATIONSNETZWERK
DISPOSITIF SANS FIL ET PROCÉDÉ ASSOCIÉ PERMETTANT DE POSITIONNER UN DISPOSITIF SANS FIL DANS UN RÉSEAU DE COMMUNICATIONS SANS FIL

(43) Date of publication of application: 14.04.2021
(73) Proprietor: Telefonaktiebolaget LM Ericsson (publ), 164 83 Stockholm (SE)
(72) Inventor: TORSNER, Johan, 02400 Kyrkslätt (FI); JIMÉNEZ, Jaime, 00530 Helsinki (FI)
(74) Representative: Zacco Sweden AB
(86) International application number: PCT/SE2018/050596
(87) International publication number: WO 2019/235985

(56) References cited:
- EP-A2- 2 667 221
- WO-A1-01/95511
- WO-A1-2013/093785
- US-A- 5 883 594
- US-A1- 2009 098 880
- US-A1- 2012 164 953
- US-A1- 2013 237 248

## Description

### TECHNICAL FIELD

Embodiments herein relate to positioning of a wireless device. In particular, embodiments herein relate to a wireless device and method therein for positioning a wireless device in a wireless communications network.

### BACKGROUND

Wireless communication networks, such as Global System for Mobile Communications (GSM) networks, Wideband Code Division Multiple Access (WCDMA) or High Speed Packet Access (HSPA) networks, 3G Long Term Evolution (LTE) networks, usually cover a geographical area which is divided into cell areas. Each cell area is served by a base station, which may also be referred as a network node, eNodeB (eNB), an access node etc. A wireless communication network may include a number of cells that can support communications for a number of wireless communication wireless devices or user equipment (UEs).

Positioning services for UEs have attracted a lot of interest for several years. In some use cases the positioning is typically triggered by an application in the UE in order to tailor a service, such as web content, specific to the current location. In other use cases it is instead triggered by the network or an application/client attached to the network, for example when locating a wireless device in an emergency situation. A coarse positioning method that was used in early stages is to determine what Cell-ID the UE is connected to or camping on, and deduce a coarse position estimate as the coverage area of that cell, and/or the area in which this cell provides the highest received signal level. Other early methods were more UE based without any required involvement by the cellular network. One such method for UEs, for example smartphones, that support communications over short-range technologies such as Wireless Local Area Network (WLAN) can be based on proximity to an access point with a known position. In addition, most smartphones also include a GPS receiver that often can provide an accurate position. In LTE Release 9, a more advanced network based positioning framework was introduced. A new network node or a positioning node, the Enhanced Serving Mobile Location Centre (E-SMLC) was introduced for management of the positioning services in the network. An LTE Positioning Protocol (LPP) for specifying position related signaling within nodes is also introduced in the network. The position estimate can be calculated in the UE, referred as UE-based, or in the network node, referred as E-SMLC-based or network NW-based, and may use information provided by the UE and/or eNB(s). Positioning methods described above, with possible enhancements, may be included in this LTE positioning framework. In addition, a new method was introduced in LTE Release 9 that involves measurements on new Positioning Reference Signals (PRS) transmitted by eNBs. The method is based on Observed Time Difference of Arrival (OTDOA), in which the UE utilizes the PRS to measure the Reference Signal Time Difference (RSTD) between subframes transmitted from a neighbor cell and a reference cell. The UE reports the measured time difference over the LPP protocol to the E-SMLC, which then uses such measurements to calculate the UE position.

Internet of Things (IoT) is a term to describe a network of interconnected physical objects that currently is evolving. The objects that are connected to loT contain different configurations of e.g. sensors, actuators, and computers with software, as well as some means for communicating with other objects. Since this type of communication focuses on the objects themselves, often without or with little human interaction, it is also referred to as Machine-to-Machine (M2M) or Machine-Type Communication (MTC). Among these objects, the wireless sensors are believed to be the most common one in the future loT. These wireless sensors are designed to perform some kind of measurement of some physical entity such as temperature, humidity, flow, level, etc. There is a large span in complexity among the different types of wireless sensors. The simplest ones consist basically only of a physical sensor and a low complexity communications unit transmitting the sensed value at predefined points in time. Slightly more advanced sensors also have an interface by which the sensor can be configured. This can be a manual interface, but in the context of wireless sensors, it is natural to consider a wireless interface over which the sensor can be controlled, e.g. to be used for network triggered measurements or setup. More advanced sensors may include more advanced control logic that for example can be used to configure the sensor operation autonomously, or at least partly autonomously. Typically, the data reported by such a wireless sensor is relevant for a given location, e.g., the measured temperature is relevant only in combination with the location at which the temperature is measured. The positions may be entered into a database together with some sort of wireless sensor identifier upon deployment of the sensors, e.g., by using an external GPS device to position the sensor and that enters the data automatically or manually into a database relating the wireless sensor identifier to the location of the wireless sensor. As such, the wireless sensor may transmit the data along with the wireless sensor identifier to enable that the measured data is related to a geographic
location of the wireless sensor. This enables e.g., big data analysis on the collection of data received from a massive number of wireless sensors. Prior art network based positioning methods are typically controlled by the network or a positioning node, and hence the network takes the decision to transmit position pilot signals, etc., and order the wireless sensor to do measurements. In some scenarios, the positioning may be made on a regular basis, every x seconds/minutes etc. In other scenarios, the positioning is irregular, based on some trigger, typically an external event in e.g. an emergency situation, but still mostly controlled by the network.

Wireless devices implementing loT, such as, e.g. the wireless sensors, are typically deployed for long life time without battery replacement. This means that the wireless device needs to save as much power as possible and hence not transmit and receive unnecessarily. Furthermore, many of the deployed wireless device implementing loT are rather stationary and positioning may not be needed too often. Hence, applying prior art positioning methods for such wireless devices implementing loT may drain the battery and reduce the life length of the wireless device and hence the loT implementation.

In US 9,651,678 B2, a two-stage procedure for positioning a mobile wireless device in a wireless communications network is described. First, a rough position of the mobile wireless device is determined using a power-efficient positioning method, i.e. a positioning method that consumes a relatively low amount of energy in the mobile wireless device is employed. Then, secondly and only if the rough position of the mobile wireless device is "interesting", another more accurate and more energy consuming method, such as, e.g. GPS based positioning, is activated. However, for wireless devices implementing loT, this positioning may still consume too much power.

US 2009/098880 A1 seems to disclose a method for determining location of a mobile terminal which includes repetitively switching power-on and power-off to a GPS receiver circuit which determines location of the mobile terminal using GPS signals.

### SUMMARY

It is an object of embodiments herein to improve positioning of a wireless device in a wireless communications network.

According to a first aspect of embodiments herein, the object is achieved by a method performed in a wireless device for positioning the wireless device in a wireless communications network. The wireless device activates a positioning unit comprised in the wireless device to perform a first position measurement. The wireless device also de-activates the positioning unit after a first position has been measured. Further, the wireless device may determine that the wireless device has moved away from the measured first position based on received radio signals from one or more network nodes in the wireless communications network. Then, when determined that the wireless device has moved away from the measured first position, the wireless device may re-activate the positioning unit to perform at least one second position measurement.

According to a second aspect of embodiments herein, the object is achieved by a wireless device for positioning the wireless device in a wireless communications network. The wireless device is configured to activate a positioning unit comprised in the wireless device to perform a first position measurement. Also, the wireless device configured to deactivate the positioning unit after a first position has been measured. Further, the wireless device is configured to determine that the wireless device has moved away from the measured first position based on received radio signals from one or more network nodes in the wireless communications network. Then, when determined that the wireless device has moved away from the measured first position, the wireless device is configured to re-activate the positioning unit to perform at least one second position measurement.

According to a third aspect of the embodiments herein, a computer program is also provided that is configured to perform the method described above. Further, according to a fourth aspect of the embodiments herein, carriers are also provided that are configured to carry the computer program configured for performing the method described above.

By first establishing a position of a wireless device by using a positioning unit, after which the positioning unit is deactivated, and then determine via received radio signals if the wireless device has moved or not, the wireless device is able to by itself turn on, or re-activate, the positioning unit only when a change in the position of the wireless device has been detected. This is performed without requiring, for example, any positioning signalling in the wireless communications network, use of large databases for storing positional information, etc. It also should be noted that no actual position of the wireless device is determined based on the received radio signals in the wireless device. This provides a simple and energy-efficient solution when determining the position of the wireless device in the wireless communications network. Hence, positioning of a wireless device in a wireless communications network is improved.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
- Fig. 1: is a schematic illustration of positioning of a wireless device in a wireless communications network according to some embodiments,
- Fig. 2: is a flowchart depicting embodiments of a method in a wireless device,
- Fig. 3: is another schematic illustration of positioning of a wireless device in a wireless communications network according to some embodiments,
- Fig. 4: is a signalling diagram illustrating a method according to some embodiments,
- Fig. 5: is a block diagram depicting embodiments of a wireless device.

### DETAILED DESCRIPTION

The figures are schematic and simplified for clarity, and they merely show details which are essential to the understanding of the embodiments presented herein, while other details have been left out. Throughout, the same reference numerals are used for identical or corresponding parts or steps.

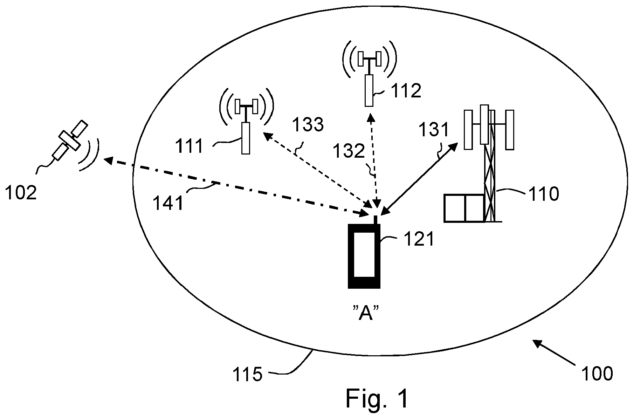

**Fig. 1** depicts an example of a **wireless communication network 100** in which embodiments herein may be implemented. The wireless communication network 100 may be any wireless system or cellular network, such as a Long Term Evolution (LTE) network, any 3^{rd} Generation Partnership Project (3GPP) cellular network, Worldwide interoperability for Microwave Access (Wimax) network, Wireless Local Area Network (WLAN/Wi-Fi), a Fourth Generation (4G) or LTE advanced network, a Fifth Generation (5G) or New Radio (NR) network etc.

The wireless communication network 100 may comprise a plurality of cells whereof one, a **cell 115** comprising a **network node 110,** is depicted in Fig.1. The network node 110 may serve wireless devices located within the cell 115. The network node 110 is a network access node or base station and may, for example, be an eNB, gNB an eNodeB, gNodeB, or an Home NodeB, or an Home eNodeB or an Home gNodeB. The wireless communication network 100 may further comprise other **network nodes 111, 112** capable to serve wireless devices. These network nodes may, for example, be access points, APs, configured to provide wireless access via other types of communication technologies, such as, e.g. WiFi, Bluetooth, etc., or other radio access technologies, such as, e.g. LTE, WCDMA, GSM, etc., than the network node 110.

A plurality of wireless devices may operate in the wireless communication network 100, whereof one **wireless device 121** is depicted Fig. 1. The wireless device 121 may be any type of loT enabled device, such as a user equipment, a mobile wireless terminal or a wireless terminal, a mobile phone, a sensor or actuator with wireless capabilities or any other radio network units capable to communicate over a radio link in the wireless communication network 100. As shown in Fig. 1, the wireless device 121 may communicate with and receive **radio signals 131** from the network node 110 in the wireless communication network 100. This is denoted by the fully-drawn arrow in Fig. 1. Also, the wireless device 121 may communicate with and receive **radio signals 132, 133** from the network nodes 111, 112 in the wireless communication network 100. This is denoted by the dashed arrows in Fig. 1.

Furthermore, the wireless device 121 is further capable of communicating with and receiving **positioning signals 141** via a **positioning system 102** that is independent of the wireless communications network 100, such as, for example, a GNSS/GPS system. This is denoted by the dashed dotted arrow in Fig. 1. This means that the wireless device 121 may be configured to receive the positioning signals 141 and, based on the positioning signals 141, accurately determine the position "A" of the wireless device 121 in Fig. 1.

Although embodiments below are described with reference to Fig. 1, this should not be construed as limiting to the embodiments herein, but merely as an example made for illustrative purposes.

As part of the developing of the embodiments described herein, it has been realized that many loT use cases relies on positioning as an important part of the application or offered service. Examples may include asset tracking, monitoring applications, transport and logistics solutions, etc., in which it is essential to know the position of the wireless devices. Also, for general loT use cases where positioning is not part of the service, knowledge of the position is relevant in order to find the wireless devices for maintenance and other purposes. Furthermore, for most loT use cases the wireless devices are typically deployed for long life time without battery replacement. This means that the wireless devices need to save as much power as possible, yet still be able to achieve an accurate positioning of the wireless device. These issues are addressed by the embodiments described herein.

By, for example, triggering activation, deactivation and re-activation of an energy-consuming GPS based positioning unit dependent upon a detected change from a first determined position, wherein the change from the first determined position is detected based on radio signal measurements, the embodiments described herein provide a positioning of the wireless device having both a high accuracy and a low energy consumption. In other words, a precise location of the wireless device may initially be derived from a GPS receiver, which is then turned off to save power. Thereafter, measurements on received radio signals are used in the wireless device in order to detect changes in the position of the wireless device. When a change in the position is detected, the GPS receiver is turned on to derive a new precise location. Optionally, the first determined position may also be used as the location of the wireless device as long as no or minor changes in the position of the wireless device is detected after the initial derived location.

The embodiments described herein may be particularly advantageous when having loT applications implemented in wireless devices that are mainly stationary but sometimes occasionally moved, e.g. due to theft. Also, the embodiments described herein are further advantageous when having loT applications implemented in wireless devices that stay roughly at the same location, in which case an exact location of the wireless device may not be needed, and only large movements are of interest and in which case an exact and accurate location of the wireless device is required.

It should also be noted that while positioning performed within the wireless communication network is more energy efficient than positioning using, for example, GNSS, GPS or other positioning systems independent of the wireless communications network, positioning performed within the wireless communication network also has a lower accuracy. The accuracy of such positioning performed within the wireless communication network normally depends on the network configuration and deployment, but errors between 50-200 meters may be considered typical. The positioning performed within the wireless communication network also requires transmission of measurement reports. This means that positioning performed within the wireless communication network may also lead to a high power consumption in this respect. An additional problem with positioning performed within the wireless communication network is limited support in the wireless device. Not all wireless devices support positioning performed within the wireless communication network, except for the mandatory support of emergency call localization.

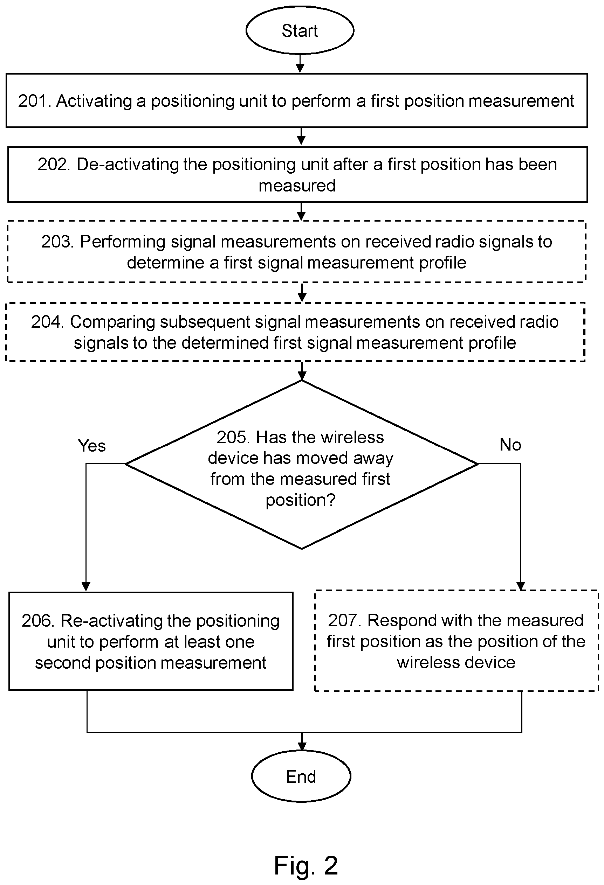

Embodiments of the wireless device 121, and a method therein will be described in more detail below with reference to Figs. 2-5.

Example of embodiments of a method performed by a wireless device 121 for positioning the wireless device 121 in a wireless communications network 100 will now be described with reference to the flowchart depicted in **Fig. 2.** Fig. 2 is an illustrated example of actions or operations which may be taken by the wireless device 121 in the wireless communication network 100.

### Action 201

The wireless device 121 activates a positioning unit comprised in the wireless device 121 to perform a first position measurement. This means that the wireless device 121 may turn on, i.e. activate, a positioning unit in the wireless device 121 in order perform a measurement of a first position of the wireless device 121. In reference to Fig. 1, this means that the wireless device 121 may activate a positioning unit in the wireless device 121 in order to receive the positioning signal 141 from the positioning system 102, whereby the positioning unit may determine the position "A" of the wireless device 121. In some embodiments, the positioning unit comprised in the wireless device 121 may be a GNSS/GPS, Global Navigation Satellite Systems/Global Positioning System, device, such as, e.g. a GNSS/GPS module or receiver. In this case, the positioning signal 141 may be a GNSS/GPS signal. Optionally, the positioning unit comprised in the wireless device 121 may be any type of positioning unit that operates independently from the wireless communications network 100. One example may be terrestrial positioning systems, such as, e.g. a Long Range Aid to Navigation, LORAN, system or similar.

### Action 202

The wireless device 121 de-activates the positioning unit after a first position has been measured. This means that after the wireless device 121 has performed the first position measurement in Action 201 and determined a first position of the wireless device 121, the wireless device 121 turns off, i.e. de-activates, the positioning unit in the wireless device 121. In reference to Fig. 1, after determining the first position "A" of the wireless device 121, wireless device 121 may turn off the positioning unit, e.g. turn off the GNSS/GPS receiver or module in the wireless device 121. This may be performed in order to save power in the wireless device 121.

### Action 203

Optionally, after determining the first position in Action 202, the wireless device 121 may perform radio signal measurements on received radio signals from one or more network nodes 110, 111, 112 in conjunction with the first position measurement in order to determine a first radio signal measurement profile associated with the measured first position. This means that the wireless device 121 may, for example, measure signal strengths, differences in Time of Arrival (ToA), and/or other characteristics of the radio signals received from surrounding network nodes 110, 111, 112 in order to determine a first radio signal measurement profile associated with the measured first position. It should also be noted that the first radio signal measurement profile may also comprise information, which may be received via the radio signals, such as, e.g. the identity of the current cell 115, i.e. a cell-ID. Here, it should also be noted that the term "in conjunction with" is meant to be interpreted as either before, during or after the first position measurement in the wireless device 121. The only requirement is that the wireless device 121 remains in the same, or at least approximately the same, location for the radio signal measurements as for the first position measurement in Action 201. In reference to Fig. 1, the wireless device 121 may perform radio signal measurements on the received radio signals 131, 132, 133 in order to determine a radio signal measurement profile for the first position "A".

### Action 204

After performing the radio signal measurements in Action 203, the wireless device 121 may compare subsequent radio signal measurements on received radio signals from one or more network nodes 110, 111, 112 with the determined first radio signal measurement profile in order to determine if the wireless device 121 has moved away from, or remains at, the measured first position. This means that the wireless device 121 may, for example, determine if there is a difference between the measurements comprised in the determined first radio signal measurement profile associated with the measured first position and measurements of current corresponding radio signals being received by the wireless device 121. If there is a difference, the wireless device 121 may optionally use this difference and/or the size of this difference to determine if the wireless device 121 should be considered to have moved away from, or considered to remain at, the measured first position.

### Action 205

The wireless device 121 determines that the wireless device 121 has moved away from the measured first position based on received radio signals from one or more network nodes 110, 111, 112 in the wireless communications network 100. This means that no actual position of the wireless device 121 is determined based on the received radio signals in the wireless device 121, but that the received radio signals in the wireless device 121 are merely used to detect if there is a change from the measured first position in Action 201. It should be noted that it is easier to determine whether there has been a change in the position of the wireless device 121 based on received radio signals, rather than to actually determine a position of the wireless device 121 based on received radio signals.

For example, if instead using a conventional so-called fingerprinting method for positioning the wireless device, wherein the wireless device performs power measurements of received radio signals from its surrounding network nodes and reports this measured power profile together with an accurate position measured by e.g. a GPS receiver, a database of power profiles and GPS positions is required to be build up. This in order for the wireless device, or other wireless device for that matter that later may need to be positioned, to be able to measure its power profile and send it to the network for positioning. In this case, the network may use the old received power profile from the wireless device and the existing database to derive a stored power profile that mostly resembles the newly received power profile and use the associated stored GPS position as the current position of the wireless device. However, such conventional so-called fingerprinting methods have the drawback that it requires a large data base to be built up and will not have a particularly good accuracy unless a dense pattern of previous power measurements and profiles are made available.

In some embodiments, the wireless device 121 may be determined to have moved away from the measured first position if the difference between at least one radio signal measurement of the determined first signal measurement profile and at least one corresponding subsequent radio signal measurement is above a threshold value. This means that the wireless device 121 may determine that the first radio signal measurement profile associated with the measured first position is no longer applicable to the wireless device 121 in case one or more radio signal measurements stored in the first radio signal measurement profile is sufficiently different, e.g. the difference exceeds a determined threshold, from corresponding current radio signal measurements.

Alternatively, in some embodiments, the wireless device 121 may be determined to remain at the measured first position if the difference between at least one radio signal measurement of the determined first radio signal measurement profile and at least one corresponding subsequent radio signal measurement is below a threshold value. This means that the wireless device 121 may determine that the first radio signal measurement profile associated with the measured first position is still applicable to the wireless device 121 in case one or more radio signal measurements stored in the first radio signal measurement profile is not sufficiently different, e.g. the difference do not exceed a determined threshold, from corresponding current radio signal measurements.

### Action 206

After the determination in Action 205, the wireless device 121, when determined that the wireless device 121 has moved away from the measured first position, reactivates the positioning unit to perform at least one second position measurement. This means that the wireless device 121 may turn on, i.e. re-activate, the positioning unit in the wireless device 121 again in order perform at least one second measurement of the new position of the wireless device 121. In reference to Fig. 1, this means that the wireless device 121 may activate the positioning unit in the wireless device 121 again in order to receive the positioning signal 141 from the positioning system 102, whereby the positioning unit in the wireless device 121 may determine the new second position of the wireless device 121.

### Action 207

Optionally, after the determination in Action 205, the wireless device 121 may, when determined that the wireless device 121 remains at the measured first position, respond with the measured first position as the position of the wireless device 121 in response to any positional queries or scheduled positioning update signalling. This means that the measured first position may be used as an estimate of the position of the wireless device 121 when the wireless device 121 has determined that it remains at the measured first position. This may, for example, be performed in case the difference between the radio signal measurement of the determined first radio signal measurement profile and the corresponding subsequent radio signal measurement is below a threshold value in Action 205. In other words, this may be performed in case the wireless device 121 has only slightly moved or not moved at all.

For example, in case a regular application or loT application in the wireless device 121 requires that the wireless device 121 is positioned, e.g. to report its position to an application or network server connected to the wireless communications network 110, then the wireless device 121 may in this case use and respond with the measured first position as an estimate of its current position.

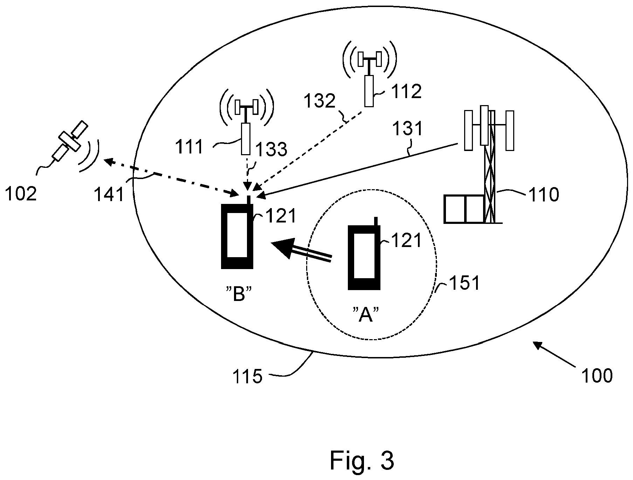

**Fig. 3** depicts an example of the wireless communication network 100 in Fig. 1 in which a first position "A" of the wireless device 121 has been measured and, for which first position "A", a first radio signal measurement profile has been determined based on the received radio signals 131, 132, 133 from the network nodes 110, 111, 112.

As the wireless device 121 is moved according to the large arrow illustrated in Fig. 3, the characteristics and/or information, such as, e.g. signal strength, time-of-arrival, etc., of the radio signals 131, 132, 133 from the network nodes 110, 111, 112 may change. This is denoted in Fig. 3 by the received radio signals 131', 132', 133' from the network nodes 110, 111, 112. Hence, if one or more characteristics and/or information of one or more of the received radio signals 131, 132, 133, which forms part of the first radio signal measurement profile of the wireless device 121, differs from the corresponding one or more characteristics and/or information of one or more of the received radio signals 131', 132', 133' in a significant way, the wireless device 121 may determine that the wireless device 121 has moved away from the measured first position "A" and that a second position "B" is needed to be measured. The wireless device 121 may then re-activate a positioning unit, such as, a GPS receiver, and measure the second position "B" accurately. In Fig. 3, the dashed area 151 illustrates an example of how far from the measured first position "A" that the wireless device 121 may move or be moved without causing a significant, or large enough, of a difference between the received radio signals 131, 132, 133 and the received radio signals 131', 132', 133' to trigger a measurement of the second position "B", i.e. trigger a re-activation of a positioning unit in the wireless device 121.

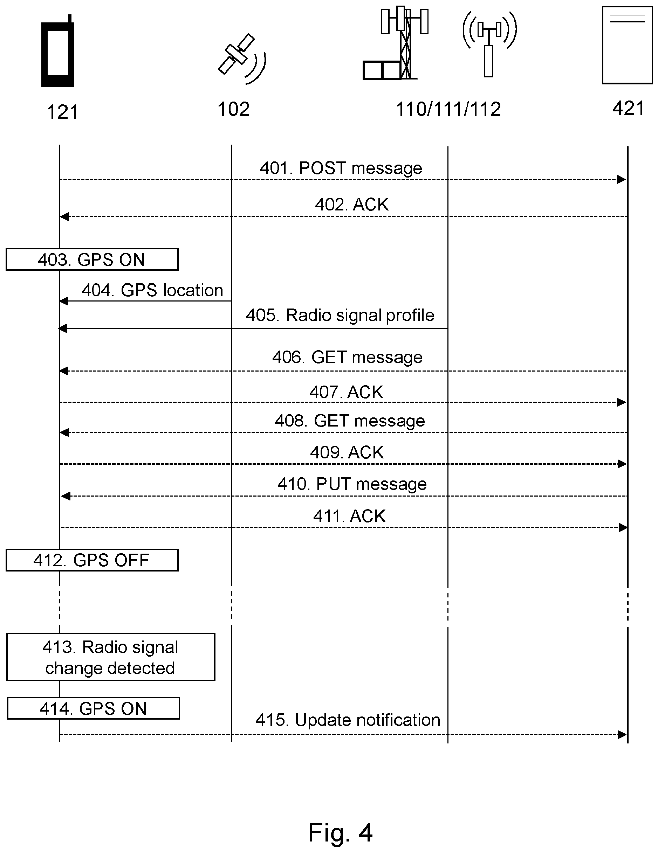

**Fig. 4** illustrated signalling according to some embodiments when implemented using a Lightweight Machine to Machine Protocol, LWM2M. The LWM2M protocol provides a simple mechanism for device management of loT devices, which may include providing interfaces for information reporting, service enablement, firmware updates, secure management, etc. Also, the LWM2M protocol is a variant of the so-called Constrained Application Protocol, CoAP, designed to be used over the User Data Plane, UDP, in accordance with RFC0768. CoAP in turn is defined in RFC7252 and is a generic Representational State Transfer, REST, application protocol for constrained devices.

**Action 401-402.** The wireless device 121 may initiate communication with a LWM2M server 421. For example, by transmitting a POST message to the LWM2M server 421 and receiving an Acknowledgment, ACK, message in response.

**Action 403.** The wireless device 121 may then turn on or activate its positioning unit, such as, e.g. a GPS receiver.

**Action 404.** Based on received positioning signals of the positioning unit, the wireless device 121 may determine and store an initial location of the wireless device 121, e.g. an initial GPS position.

**Action 405.** The wireless device 121 may also measure and/or receive information and/or radio signals that is available to the wireless device 121 from surrounding network nodes, such as, e.g. the network nodes 110, 111, 112. The information and/or signals may be a combination of signal strength or power, difference in ToA, cell-ID of the current cell of the wireless device 121, etc. The information and/or signal may be stored as a radio signal measurement profile, or power profiled, for the wireless device 121 that is associated with the initial location of the wireless device 121.

**Action 406.** In some embodiments, the wireless device 121 may receive a GET message with the CoAP Observer option, according to RFC7641, set to 1 from the LWM2M server 421.

**Action 407.** The reception in Action 406 may then trigger an LWM2M Client service running in the wireless device 121 to send a notification with an Acknowledgement, ACK, 2.05 that comprises the initial location of the wireless device 121 to the LWM2M server 421.

**Action 408.** The wireless device 121 may then receive another GET message from the LWM2M server 421 to a device object comprising the radio signal measurement profile in the LWM2M Client service running in the wireless device 121, e.g. "Object 3/0/" according to LWM2M.

**Action 409.** The reception in Action 408 may then trigger an LWM2M Client service running in the wireless device 121 to send a notification with an Acknowledgement, ACK, 2.05 that comprises an indication of the radio signal measurement profile of the wireless device 121 to the LWM2M server 421.

**Action 410.** Based on the received information on the initial location of the wireless device 121 and current power profile from the wireless device 121, the LWM2M server 421 may send a PUT message setting the wireless device 121 into a "power saving"-mode, e.g. sending information indicating to the wireless device 121 that it should take action in order to reduce its energy consumption.

**Action 411.** The reception in Action 410 may then trigger an LWM2M Client service running in the wireless device 121 to send a notification with an Acknowledgement, ACK, 2.04 acknowledging the "power saving"-mode to the LWM2M server 421.

**Action 412.** The wireless device 121 may then turn off or de-activate its positioning unit, such as, e.g. a GPS receiver, in order to save energy in the battery in the wireless device 121.

**Action 413.** If the wireless device 121, at some time after turning off the positioning unit in Action 412, determines that the radio signal measurement profile has only marginally changed or not changed at all, the wireless device 121 may assume that the wireless device 121 has not moved and that the previously stored initial location in Action 404 is to be used by applications, such as, e.g. LWM2M Client service, in the wireless device 121 as the current location of the wireless device 121. On the contrary, if the wireless device 121, at some time after turning off the positioning unit in Action 412, determines that the radio signal measurement profile has significantly changed, e.g. more than a specific value or exceeded a threshold value, the wireless device 121 may assume that the wireless device 121 has likely moved.

**Action 414.** In case the wireless device 121 assumes that the wireless device 121 has likely moved in Action 413, the wireless device 121 may turn on or re-activate the positioning unit, such as, e.g. a GPS receiver. Hence, the wireless device 121 may determine and store a new location of the wireless device 121, i.e. a new GPS position based on received GPS positioning signals. Optionally, the wireless device 121 may also measure and/or receive information and/or radio signals that is available to the wireless device 121 from surrounding network nodes to determined and store a new radio signal measurement profile, or power profiled, for the wireless device 121 that is associated with the current location of the wireless device 121.

**Action 415.** In some embodiments, the wireless device 121 may also send a notification update to the LWM2M server 421 about an Observed Resource, according to RFC7641, wherein the notification update may comprise the current radio signal measurement profile and/or the new location of the wireless device 121.

Advantageously, the above embodiments will allow the positioning unit in the wireless device 121, e.g. the GPS receiver, to only be turned on or activated when the wireless device 121 has moved. This will consume less energy in the wireless device 121 than, for example, turning positioning unit on for each time the location of the wireless device 121 is required by an application or the wireless communication network 100. The above embodiments may also be particularly advantageous when implementing a LWM2M application in a stationary or semi-stationary loT device.

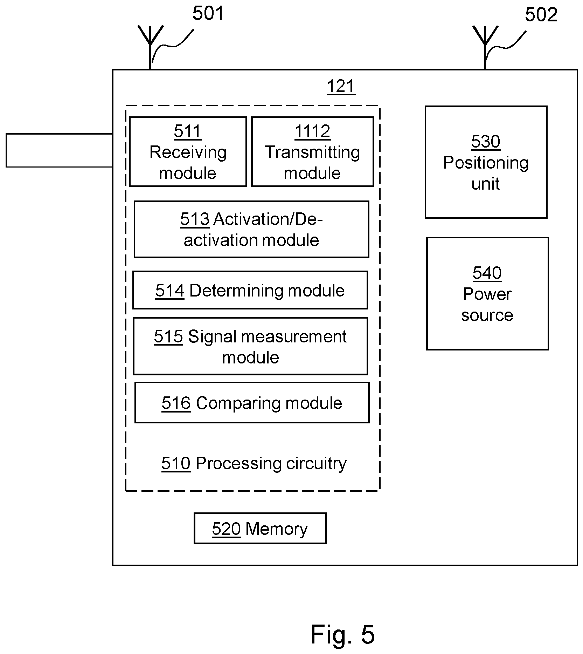

To perform the method actions in a wireless device 121 for positioning the wireless device 121 in a wireless communications network 100, the wireless device 121 may comprise the following arrangement depicted in **Fig 5.** Fig 5 shows a schematic block diagram of embodiments of a wireless device 121.

The wireless device 121 may comprise **processing circuitry 510,** a **memory 520** and at **least one antenna 501, 502.** For example, one of the at least one antennas 501, 502 may be used in order to receive radio signals from one or more of the network nodes 110, 111, 112 in the wireless communications network 100, and another one of the at least one antennas 501, 502 may be used to receive the positioning signal 141 from the positioning system 102 in the wireless communications network 100. The wireless device 121 also comprise a **positioning unit 530** and **a power source 540.** According to some embodiments, the positioning unit 530 may be a GNSS/GPS, Global Navigation Satellite Systems/Global Positioning System, device, such as, e.g. a GNSS/GPS module or receiver, or any type of positioning unit that operates independently from the wireless communications network 100, such as, e.g. a terrestrial positioning systems, such as, e.g. a Long Range Aid to Navigation, LORAN, system or similar.The power source 540 may be a battery.

The processing circuitry 510 may also comprise a **receiving module 511** and a **transmitting module 512.** The receiving module 511 and the transmitting module 512 may comprise radio circuitries, such as, e.g. Radio Frequency, RF, circuitry and baseband processing circuitry, capable of receiving and transmit radio signals in the wireless communications network 100. The receiving module 511 and the transmitting module 512 may also form part of a single transceiver. It should also be noted that some or all of the functionality described in the embodiments above as being performed by the wireless device 121 may be provided by the processing circuitry 510 executing instructions stored on a computer-readable medium, such as, e.g. the memory 520 shown in Fig. 5. Alternative embodiments of the wireless device 121 may comprise additional components, such as, for example, an **activation/deactivation module 513,** a **determining module 514,** a **signal measurement module 515,** and a **comparing module 516,** each responsible for providing its respective functionality necessary to support the embodiments described herein.

The wireless device 121 or processing circuitry 510 is configured to, or may comprise the activation/deactivation module 513 configured to, activate the positioning unit 530 comprised in the wireless device 121 to perform a first position measurement. Also, the wireless device 121 or processing circuitry 510 is configured to, or may comprise the activation/deactivation module 513 configured to, de-activate the positioning unit 530 after a first position has been measured. Further, the wireless device 121 or processing circuitry 510 is configured to, or may comprise the determining module 514 configured to, determine if the wireless device 121 has moved away from the measured first position based on received radio signals from one or more network nodes 110, 111, 112 in the wireless communications network 100. Furthermore, the wireless device 121 or processing circuitry 510 is configured to, or may comprise the activation/deactivation module 513 configured to, when determined that the wireless device 121 has moved away from the measured first position, re-activate the positioning unit 530 to perform at least one second position measurement.

In some embodiments, the wireless device 121 or processing circuitry 1510 may be configured to, or may comprise the transmitting module 512 configured to, when determined that the wireless device 121 remains at the measured first position, respond with the measured first position as the position of the wireless device 121 in response to any position queries or scheduled positioning update signalling.

In some embodiments, the wireless device 121 or processing circuitry 1510 may be configured to, or may comprise the signal measurement module 515 configured to, perform radio signal measurements on received radio signals from one or more network nodes 110, 111, 112 in conjunction with the first position measurement in order to determine a first radio signal measurement profile associated with the measured first position. In this case, the wireless device 121 or processing circuitry 510 may also be further configured to, or may comprise the comparing module 516 being configured to, compare subsequent radio signal measurements on received radio signals from one or more network nodes 110, 111, 112 to the determined first radio signal measurement profile in order to determine if the wireless device 121 has moved away from, or remains at, the measured first position.

In some embodiments, the wireless device 121 or processing circuitry 510 is configured to, or may comprise the determining module 514 configured to, determine that the wireless device 121 has moved away from the measured first position if the difference between at least one radio signal measurement of the determined first radio signal measurement profile and at least one corresponding radio subsequent signal measurement is above a threshold value. Alternatively, the wireless device 121 or processing circuitry 510 is configured to, or may comprise the determining module 514 configured to, determine that the wireless device 121 remains at the measured first position if the difference between at least one radio signal measurement of the determined first radio signal measurement profile and at least one corresponding subsequent radio signal measurement is below a threshold value.

Furthermore, the embodiments for positioning the wireless device 121 in a wireless communications network 100 described above may be implemented through one or more processing circuitries, such as, the processing circuitry 510 in the wireless device 121 depicted in Fig. 5, together with computer program code for performing the functions and actions of the embodiments herein. The program code mentioned above may also be provided as a computer program product, for instance in the form of a data carrier carrying computer program code or code means for performing the embodiments herein when being loaded into the processing circuitry 510 in the node 110, 121. The computer program code may e.g. be provided as pure program code in the wireless device 121 or on a server and downloaded to the wireless device 121. Thus, it should be noted that the modules of the wireless device 121 may in some embodiments be implemented as computer programs stored in memory, e.g. in the memory modules 520 in Fig. 5, for execution by processing circuitries or processing modules, e.g. the processing circuitry 510 of Fig. 5.

Those skilled in the art will also appreciate that the processing circuitry 510 and the memory 520 described above may refer to a combination of analog and digital circuits, and/or one or more processors configured with software and/or firmware, e.g. stored in a memory, that when executed by the one or more processors such as the processing circuitry 520 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "wireless devices" may be represented by the same item of hardware.

It should also be noted that the various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage wireless devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

The embodiments herein are not limited to the above described preferred embodiments. Therefore, the above embodiments should not be construed as limiting.

### Abbreviations

- UE: User Equipment
- E-SMLC: Enhanced Serving Mobile Location Centre
- LPP: LTE Positioning Protocol
- LTE: Long-Term Evolution
- NR: New Radio
- PRS: Positioning Reference Signals
- OTDOA: Observed Time Difference of Arrival
- ToA: Time of Arrival
- RSTD: Reference Signal Time Difference
- loT: Internet of Things
- LORAN: Long Range Aid to Navigation
- GNSS: Global Navigation Satellite Systems
- GPS: Global Positioning System
- WLAN: Wireless Local Area Network
- LWM2M: Lightweight Machine to Machine Protocol
- CoAP: Constrained Application Protocol
- UDP: User Data Plane
- REST: Representational State Transfer Protocol

## Claims

1. A method performed in a wireless device (121) for positioning the wireless device (121) in a wireless communications network (100), the method comprising:
*activating* (201) a positioning unit (530) comprised in the wireless device (121) to perform a first position measurement;
the method further comprising
*de-activating* (202) the positioning unit (530) after a first position (A) has been measured;
*performing* (203) radio signal measurements on received radio signals from one or more network nodes (110, 111, 112) in conjunction with the first position measurement in order to determine a first radio signal measurement profile associated with the measured first position (A)
*comparing* (204) subsequent radio signal measurements on received radio signals from one or more network nodes (110, 111, 112) to the determined first radio signal measurement profile in order to determine if the wireless device (121) has moved away from, or remains at, the measured first position (A)
*determining* (205) if the wireless device (121) has moved away from the measured first position (A) based on received radio signals from one or more network nodes (110, 111, 112) in the wireless communications network (100), wherein the wireless device (121) is determined to have moved away from the measured first position if the difference between at least one radio signal measurement of the determined first radio signal measurement profile and at least one corresponding subsequent radio signal measurement is above a threshold value; and
when determined that the wireless device (121) has moved away from the measured first position (A), *re-activating* (206) the positioning unit (530) to perform at least one second position measurement.

2. The method according to claim 1, further comprising when determined that the wireless device (121) remains at the measured first position (A), *responding* (207) with the measured first position as the position of the wireless device (121) in response to any positional queries or scheduled positioning update signalling.

3. The method according to any of claims 1 or 2, wherein the positioning unit (530) is a Global Navigation Satellite Systems/Global Positioning System, GNSS/GPS, device, or any other type of positioning unit that operates independently from the wireless communications network (100).

4. The method according to claim 1, wherein the wireless device (121) is determined to remain at the measured first position if the difference between at least one radio signal measurement of the determined first radio signal measurement profile and at least one corresponding subsequent radio signal measurement is below a threshold value.

5. A wireless device (121) for positioning the wireless device (121) in a wireless communications network (100), wherein the wireless device (121) is configured to activate a positioning unit (530) comprised in the wireless device (121) to perform a first position measurement, and wherein the wireless device (121) is **characterized by** further being configured to:
deactivate the positioning unit (530) after a first position (A) has been measured, perform radio signal measurements on received radio signals from one or more network nodes (110, 111, 112) in conjunction with the first position measurement in order to determine a first radio signal measurement profile associated with the measured first position (A), and compare subsequent radio signal measurements on received radio signals from one or more network nodes (110, 111, 112) to the determined first radio signal measurement profile in order to determine if the wireless device (121) has moved away from, or remains at, the measured first position (A), determine if the wireless device (121) has moved away from the measured first position (A) based on received radio signals from one or more network nodes (110, 111, 112) in the wireless communications network (100) wherein the wireless device (121) is determined to have moved away from the measured first position if the difference between at least one radio signal measurement of the determined first radio signal measurement profile and at least one corresponding subsequent radio signal measurement is above a threshold value, and,
when determined that the wireless device (121) has moved away from the measured first position (A), re-activate the positioning unit (530) to perform at least one second position measurement.

6. The wireless device (121) according to claim 5, further configured to, when determined that the wireless device (121) remains at the measured first position (A), respond with the measured first position as the position of the wireless device (121) in response to any position queries or scheduled positioning update signalling.

7. The wireless device (121) according to any of claims 5 or 6, wherein the positioning unit (530) is a Global Navigation Satellite Systems/Global Positioning System, GNSS/GPS, device, or any other type of positioning device that operates independently from the wireless communications network (100).

8. The wireless device (121) according to claim 5, further configured to determine that the wireless device (121) remains at the measured first position if the difference between at least one radio signal measurement of the determined first radio signal measurement profile and at least one corresponding subsequent radio signal measurement is below a threshold value.

9. The wireless device (121) according to any of claims 5-8, comprising at least one processing circuitry (510) and a memory (520), wherein the memory (520) contains instructions executable by the at least one processing circuitry (510).

10. A computer program product, comprising instructions which, when executed on at least one processing circuitry (510), cause the at least one processing circuitry (510) to carry out the method according to any of claims 1-4.

11. A carrier containing the computer program product according to claim 10, wherein the carrier is one of: an electronic signal, optical signal, radio signal, or computer-readable storage medium.

## Patentansprüche

1. Verfahren, das in einer drahtlosen Vorrichtung (121) zur Positionsbestimmung der drahtlosen Vorrichtung (121) in einem Drahtloskommunikationsnetz (100) durchgeführt wird, wobei das Verfahren Folgendes umfasst:
Aktivieren (201) einer Positionsbestimmungseinheit (530), die in der drahtlosen Vorrichtung (121) umfasst ist, um eine erste Positionsmessung durchzuführen;
wobei das Verfahren ferner Folgendes umfasst:
Deaktivieren (202) der Positionsbestimmungseinheit (530), nachdem eine erste Position (A) gemessen wurde;
Durchführen (203) von Funksignalmessungen an empfangenen Funksignalen von einem oder mehreren Netzknoten (110, 111, 112) in Verbindung mit der ersten Positionsmessung, um ein erstes Funksignalmessprofil zu bestimmen, das der gemessenen ersten Position (A) zugeordnet ist,
Vergleichen (204) nachfolgender Funksignalmessungen an empfangenen Funksignalen von einem oder mehreren Netzknoten (110, 111, 112) mit dem bestimmten ersten Funksignalmessprofil, um zu bestimmen, ob sich die drahtlose Vorrichtung (121) von der gemessenen ersten Position (A) wegbewegt hat oder an dieser bleibt,
Bestimmen (205), ob sich die drahtlose Vorrichtung (121) von der gemessenen ersten Position (A) wegbewegt hat, auf Grundlage von empfangenen Funksignalen von einem oder mehreren Netzknoten (110, 111, 112) in dem Drahtloskommunikationsnetz (100), wobei bestimmt wird, dass sich die drahtlose Vorrichtung (121) von der gemessenen ersten Position wegbewegt hat, wenn die Differenz zwischen mindestens einer Funksignalmessung des bestimmten ersten Funksignalmessprofils und mindestens einer entsprechenden nachfolgenden Funksignalmessung über einem Schwellenwert liegt; und
wenn bestimmt wird, dass sich die drahtlose Vorrichtung (121) von der gemessenen ersten Position (A) wegbewegt hat, erneutes Aktivieren (206) der Positionsbestimmungseinheit (530), um mindestens eine zweite Positionsmessung durchzuführen.

2. Verfahren nach Anspruch 1, ferner umfassend
wenn bestimmt wird, dass die drahtlose Vorrichtung (121) an der gemessenen ersten Position (A) bleibt, Antworten (207) mit der gemessenen ersten Position als die Position der drahtlosen Vorrichtung (121) als Reaktion auf Positionsabfragen oder geplante Positionsbestimmungsaktualisierungssignalisierung.

3. Verfahren nach einem der Ansprüche 1 oder 2, wobei die Positionsbestimmungseinheit (530) eine Vorrichtung für globale Navigationssatellitensysteme / ein globales Positionsbestimmungssystem, GNSS/GPS, oder eine beliebige andere Art von Positionsbestimmungseinheit ist, die unabhängig von dem Drahtloskommunikationsnetz (100) arbeitet.

4. Verfahren nach Anspruch 1, wobei bestimmt wird, dass die drahtlose Vorrichtung (121) an der gemessenen ersten Position bleibt, wenn die Differenz zwischen mindestens einer Funksignalmessung des bestimmten ersten Funksignalmessprofils und mindestens einer entsprechenden nachfolgenden Funksignalmessung unter einem Schwellenwert liegt.

5. Drahtlose Vorrichtung (121) zur Positionsbestimmung der drahtlosen Vorrichtung (121) in einem Drahtloskommunikationsnetz (100), wobei die drahtlose Vorrichtung (121) dazu konfiguriert ist, eine Positionsbestimmungseinheit (530) zu aktivieren, die in der drahtlosen Vorrichtung (121) umfasst ist, um eine erste Positionsmessung durchzuführen, und wobei die drahtlose Vorrichtung (121) **dadurch gekennzeichnet ist, dass** sie ferner konfiguriert ist zum:
Deaktivieren der Positionsbestimmungseinheit (530), nachdem eine erste Position (A) gemessen wurde, Durchführen von Funksignalmessungen an empfangenen Funksignal von einem oder mehreren Netzknoten (110, 111, 112) in Verbindung mit der ersten Positionsmessung, um ein erstes Funksignalmessprofil zu bestimmen, das der gemessenen ersten Position (A) zugeordnet ist, und Vergleichen nachfolgender Funksignalmessungen an empfangenen Funksignalen von einem oder mehreren Netzknoten (110, 111, 112) mit dem bestimmten ersten Funksignalmessprofil, um zu bestimmen, ob sich die drahtlose Vorrichtung (121) von der gemessenen ersten Position (A) wegbewegt hat oder an dieser bleibt, Bestimmen, ob sich die drahtlose Vorrichtung (121) von der gemessenen ersten Position (A) wegbewegt hat, auf Grundlage von empfangenen Funksignalen von einem oder mehreren Netzknoten (110, 111, 112) in dem Drahtloskommunikationsnetz (100), wobei bestimmt wird, dass sich die drahtlose Vorrichtung (121) von der gemessenen ersten Position wegbewegt hat, wenn die Differenz zwischen mindestens einer Funksignalmessung des bestimmten ersten Funksignalmessprofils und mindestens einer entsprechenden nachfolgenden Funksignalmessung über einem Schwellenwert liegt, und,
wenn bestimmt wird, dass sich die drahtlose Vorrichtung (121) von der gemessenen ersten Position (A) wegbewegt hat, erneutes Aktivieren der Positionsbestimmungseinheit (530), um mindestens eine zweite Positionsmessung durchzuführen.

6. Drahtlose Vorrichtung (121) nach Anspruch 5, die ferner dazu konfiguriert ist, wenn bestimmt wird, dass die drahtlose Vorrichtung (121) an der gemessenen ersten Position (A) bleibt, mit der gemessenen ersten Position als die Position der drahtlosen Vorrichtung (121) als Reaktion auf Positionsabfragen oder geplante Positionsbestimmungsaktualisierungssignalisierung zu antworten.

7. Drahtlose Vorrichtung (121) nach einem der Ansprüche 5 oder 6, wobei die Positionsbestimmungseinheit (530) eine Vorrichtung für globale Navigationssatellitensysteme / ein globales Positionsbestimmungssystem, GNSS/GPS, oder eine beliebige andere Art von Positionsbestimmungseinheit ist, die unabhängig von dem Drahtloskommunikationsnetz (100) arbeitet.

8. Drahtlose Vorrichtung (121) nach Anspruch 5, die ferner dazu konfiguriert ist, zu bestimmen, dass die drahtlose Vorrichtung (121) an der gemessenen ersten Position bleibt, wenn die Differenz zwischen mindestens einer Funksignalmessung des bestimmten ersten Funksignalmessprofils und mindestens einer entsprechenden nachfolgenden Funksignalmessung unter einem Schwellenwert liegt.

9. Drahtlose Vorrichtung (121) nach einem der Ansprüche 5-8, umfassend mindestens eine Verarbeitungsschaltung (510) und einen Speicher (520), wobei der Speicher (520) Anweisungen enthält, die durch die mindestens eine Verarbeitungsschaltung (510) ausführbar sind.

10. Computerprogrammprodukt, umfassend Anweisungen, die bei Ausführung auf mindestens einer Verarbeitungsschaltung (510) die mindestens eine Verarbeitungsschaltung (510) dazu veranlassen, das Verfahren nach einem der Ansprüche 1-4 auszuführen.

11. Träger, der das Computerprogrammprodukt nach Anspruch 10 enthält, wobei der Träger eines der Folgenden ist: ein elektronisches Signal, ein optisches Signal, ein Funksignal oder ein computerlesbares Speichermedium.

## Revendications

1. Procédé mis en œuvre dans un dispositif sans fil (121) pour positionner le dispositif sans fil (121) dans un réseau de communication sans fil (100), le procédé comprenant :
*l'activation* (201) d'une unité de positionnement (530) comprise dans le dispositif sans fil (121) pour réaliser une première mesure de position ;
le procédé comprenant également
*la désactivation* (202) de l'unité de positionnement (530) après qu'une première position (A) a été mesurée ;
*la réalisation* (203) de mesures de signal radio sur des signaux radio reçus provenant d'un ou de plusieurs noeuds de réseau (110, 111, 112) conjointement avec la première mesure de position afin de déterminer un premier profil de mesure de signal radio associé à la première position mesurée (A)
*la comparaison* (204) de mesures de signal radio ultérieures sur des signaux radio reçus d'un ou de plusieurs noeuds de réseau (110, 111, 112) au premier profil de mesure de signal radio déterminé afin de déterminer si le dispositif sans fil (121) s'est éloigné de la première position mesurée (A) ou y reste
*le fait de déterminer* (205) si le dispositif sans fil (121) s'est éloigné de la première position mesurée (A) sur la base de signaux radio reçus d'un ou de plusieurs noeuds de réseau (110, 111, 112) dans le réseau de communication sans fil (100), dans lequel le dispositif sans fil (121) est déterminé comme s'étant éloigné de la première position mesurée si la différence entre au moins une mesure de signal radio du premier profil de mesure de signal radio déterminé et au moins une mesure de signal radio ultérieure correspondante est supérieure à une valeur seuil ; et
lorsqu'il est déterminé que le dispositif sans fil (121) s'est éloigné de la première position mesurée (A), la *réactivation* (206) de l'unité de positionnement (530) pour réaliser au moins une seconde mesure de position.

2. Procédé selon la revendication 1, comprenant également
lorsqu'il est déterminé que le dispositif sans fil (121) reste à la première position mesurée (A), la *réponse* (207) avec la première position mesurée comme position du dispositif sans fil (121) en réponse à toute requête de position ou signalisation de mise à jour de positionnement programmée.

3. Procédé selon l'une quelconque des revendications 1 ou 2, dans lequel l'unité de positionnement (530) est un dispositif de systèmes mondiaux de navigation par satellite/système de positionnement mondial, GNSS/GPS, ou tout autre type d'unité de positionnement qui fonctionne indépendamment du réseau de communication sans fil (100).

4. Procédé selon la revendication 1, dans lequel le dispositif sans fil (121) est déterminé comme restant à la première position mesurée si la différence entre au moins une mesure de signal radio du premier profil de mesure de signal radio déterminé et au moins une mesure de signal radio ultérieure correspondante est inférieure à une valeur seuil.

5. Dispositif sans fil (121) pour le positionnement du dispositif sans fil (121) dans un réseau de communication sans fil (100), dans lequel le dispositif sans fil (121) est configuré pour activer une unité de positionnement (530) comprise dans le dispositif sans fil (121) pour réaliser une première mesure de position, et dans lequel le dispositif sans fil (121) est **caractérisé en ce qu'**il est également configuré pour :
désactiver l'unité de positionnement (530) après qu'une première position (A) a été mesurée, réaliser des mesures de signal radio sur des signaux radio reçus d'un ou de plusieurs noeuds de réseau (110, 111, 112) conjointement avec la première mesure de position afin de déterminer un premier profil de mesure de signal radio associé à la première position mesurée (A), et comparer des mesures de signal radio ultérieures sur des signaux radio reçus d'un ou de plusieurs noeuds de réseau (110, 111, 112) au premier profil de mesure de signal radio déterminé afin de déterminer si le dispositif sans fil (121) s'est éloigné de la première position mesurée (A) ou y reste, déterminer si le dispositif sans fil (121) s'est éloigné de la première position mesurée (A) sur la base de signaux radio reçus d'un ou de plusieurs noeuds de réseau (110, 111, 112) dans le réseau de communication sans fil (100), dans lequel le dispositif sans fil (121) est déterminé comme s'étant éloigné de la première position mesurée si la différence entre au moins une mesure de signal radio du premier profil de mesure de signal radio déterminé et au moins une mesure de signal radio ultérieure correspondante est supérieure à une valeur seuil, et,
lorsqu'il est déterminé que le dispositif sans fil (121) s'est éloigné de la première position mesurée (A), réactiver l'unité de positionnement (530) pour réaliser au moins une seconde mesure de position.

6. Dispositif sans fil (121) selon la revendication 5, configuré également pour,
lorsqu'il est déterminé que le dispositif sans fil (121) reste à la première position mesurée (A),
répondre avec la première position mesurée comme position du dispositif sans fil (121) en réponse à toute requête de position ou signalisation de mise à jour de positionnement programmée.

7. Dispositif sans fil (121) selon l'une quelconque des revendications 5 ou 6, dans lequel l'unité de positionnement (530) est un dispositif de systèmes mondiaux de navigation par satellite/système de positionnement mondial, GNSS/GPS, ou tout autre type de dispositif de positionnement qui fonctionne indépendamment du réseau de communication sans fil (100).

8. Dispositif sans fil (121) selon la revendication 5, configuré également pour déterminer que le dispositif sans fil (121) reste à la première position mesurée si la différence entre au moins une mesure de signal radio du premier profil de mesure de signal radio déterminé et au moins une mesure de signal radio ultérieure correspondante est inférieure à une valeur seuil.

9. Dispositif sans fil (121) selon l'une quelconque des revendications 5 à 8, comprenant au moins un circuit de traitement (510) et une mémoire (520), dans lequel la mémoire (520) contient des instructions exécutables par l'au moins un circuit de traitement (510).

10. Produit de programme informatique, comprenant des instructions qui, lorsqu'elles sont exécutées sur au moins un circuit de traitement (510), amènent l'au moins un circuit de traitement (510) à exécuter le procédé selon l'une quelconque des revendications 1 à 4.

11. Support contenant le produit de programme informatique selon la revendication 10, dans lequel le support est l'un parmi : un signal électronique, un signal optique, un signal radio ou un support de stockage lisible par ordinateur.
